(19)

Europäisches Patentamt
European Patent Office
Office européen des brevets

(11) **EP 4 699 987 A1**

(12) **EUROPEAN PATENT APPLICATION**

(43) Date of publication:
**25.02.2026 Bulletin 2026/09**

(21) Application number: **25196721.2**

(22) Date of filing: **19.08.2025**

(51) International Patent Classification (IPC):
***C01G 53/50*** (2025.01)

(52) Cooperative Patent Classification (CPC):
**C01G 53/50;** C01P 2002/74; C01P 2002/77;
C01P 2004/61; C01P 2006/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **19.08.2024  KR 20240110672
18.08.2025  KR 20250114149**

(71) Applicant: **SK On Co., Ltd.
Seoul 03161 (KR)**

(72) Inventors:
• **KIM, Jong Hwa
  Daejeon 34124 (KR)**
• **YOO, Yeong Bin
  Daejeon 34124 (KR)**
• **PARK, Sung Soon
  Daejeon 34124 (KR)**
• **YOON, Jeong Bae
  Daejeon 34124 (KR)**
• **KONG, Nyung Joo
  Daejeon 34124 (KR)**

(74) Representative: **Stolmár & Partner
Patentanwälte PartG mbB
Blumenstraße 17
80331 München (DE)**

(54) **CATHODE ACTIVE MATERIAL PRECURSOR FOR SECONDARY BATTERY, CATHODE ACTIVE MATERIAL FOR SECONDARY BATTERY AND SECONDARY BATTERY**

(57)    A cathode active material precursor for a lithium secondary battery according to embodiments of the present disclosure includes transition metal hydroxide particles having a crystal grain size of 10 nm to 18 nm in a (001) plane direction as measured by X-ray diffraction (XRD) analysis, and an XRD peak intensity ratio of 0.7 to 1.3 as defined by Equation 1.

[FIG. 1]

**Description**

CROSS-REFERENCE TO RELATED APPLICATION

This application claims priority to Korean Patent Application No. 10-2024-0110672 filed August 19, 2024 and Korean Patent Application No. 10-2025-0114149 filed August 18, 2025, the disclosure of which is hereby incorporated by reference in its entirety.

BACKGROUND

1. Technical Feld

The disclosure of the present application relates to a cathode active material precursor for a secondary battery, a cathode active material for a secondary battery, and a secondary battery comprising the same.

2. Technical Considerations

Secondary batteries are batteries that can be repeatedly charged and discharged. With the development of information and communication and display industries, the secondary batteries have been widely applied as power sources for portable electronic communication devices, such as camcorders, mobile phones, and laptop PCs. In addition, battery packs including the secondary batteries have recently been developed and applied as power sources for eco-friendly vehicles, such as hybrid cars.
Examples of the secondary battery include a lithium secondary battery, a nickel-cadmium battery, and a nickel-hydrogen battery. Among these, lithium secondary batteries are actively being researched and developed due to their high operating voltage, high energy density per unit weight, and advantages in charging speed and weight reduction.
As the application range of lithium secondary batteries expands, longer cycle life, higher capacity, and improved operational stability are required. For example, the capacity characteristics and cycle life characteristics of the lithium secondary battery may deteriorate due to structural deformation of the cathode active material, and side reactions between the cathode active material and electrolyte in the secondary battery.

SUMMARY

According to a non-limiting aspect of the present disclosure, a cathode active material precursor for a secondary battery with improved capacity characteristics and cycle life characteristics may be provided.
According to another non-limiting aspect of the present disclosure, a cathode active material for a secondary battery with improved capacity characteristics and cycle life characteristics may be provided.
According to another non-limiting aspect of the present disclosure, a secondary battery with improved capacity characteristics and cycle life characteristics may be provided.
A cathode active material precursor for a secondary battery according to non-limiting embodiments of the present disclosure comprises transition metal hydroxide particles having a crystal grain size of 10 nm to 18 nm in a (001) plane direction as measured by X-ray diffraction (XRD) analysis, and an XRD peak intensity ratio of 0.7 to 1.3 as defined by Equation 1 below:

[Equation 1]

$$\text{XRD peak intensity ratio} = I(101)/I(001)$$

In Equation 1, I(101) represents a peak intensity of a (101) plane of the transition metal hydroxide particles obtained through XRD analysis, and I(001) represents a peak intensity of a (001) plane of the transition metal hydroxide particles obtained through XRD analysis.
In some non-limiting embodiments, the crystal grain size in the (001) plane direction may be measured using Equation 2 below:

[Equation 2]

$$D = \frac{0.9\lambda}{\beta cos\theta}$$

In Equation 2, D represents the crystal grain size, λ represents the X-ray wavelength, β represents the full width at half maximum of the peak of the (001) plane, and θ represents the diffraction angle.

In some non-limiting embodiments, the XRD peak intensity ratio may be 1.207 to 1.296.

In some non-limiting embodiments, the crystal grain size in the (001) plane direction may be 15.3 nm to 17.5 nm.

In some non-limiting embodiments, the transition metal hydroxide particles may have a median particle diameter (D50) of 2 μm to 4 μm.

In some non-limiting embodiments, the transition metal hydroxide particles may have a median particle diameter (D50) of 3.5 μm to 3.9 μm.

In some non-limiting embodiments, an oxygen position (Zox) in the lattice of the transition metal hydroxide particles, obtained by the Rietveld refinement method through XRD analysis, may be 0.2168 to 0.2252.

In some non-limiting embodiments, Zox may be 0.2238 to 0.2244.

In some non-limiting embodiments, the transition metal hydroxide particles may comprise nickel, cobalt and/or manganese.

In some non-limiting embodiments, the transition metal hydroxide particles may comprise a coating element and/or a doping element. The coating element and/or doping element may comprise at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, La and Zr.

In some non-limiting embodiments, the transition metal hydroxide particles may comprise a secondary particle form formed by aggregation of a plurality of primary particles.

A cathode active material for a secondary battery according to non-limiting embodiments of the present disclosure comprises lithium-transition metal oxide particles which are prepared from the above-described cathode active material precursor.

In some non-limiting embodiments, the lithium-transition metal oxide particles may comprise a single particle form.

A secondary battery according to non-limiting embodiments of the present disclosure comprises: a cathode comprising the above-described cathode active material for a secondary battery; and an anode disposed to face the cathode.

According to a non-limiting embodiment of the present disclosure, the capacity characteristics of the cathode active material precursor, the cathode active material, and the secondary battery may be improved.

According to a non-limiting embodiment of the present disclosure, the output characteristics of the cathode active material precursor, the cathode active material, and the secondary battery may be improved.

According to a non-limiting embodiment of the present disclosure, the cycle life characteristics of the cathode active material precursor, the cathode active material, and the secondary battery may be enhanced.

The cathode active material precursor for a secondary battery, the cathode active material for a secondary battery, and the secondary battery of the present disclosure may be widely applied in green technology fields, such as electric vehicles, battery charging stations, as well as solar power generation, wind power generation, and the like, which use the batteries. The cathode active material precursor for a secondary battery, the cathode active material for a secondary battery, and the secondary battery of the present disclosure may be used in eco-friendly electric vehicles, hybrid vehicles, and the like, which are aimed at mitigating climate change by reducing air pollution and greenhouse gas emissions.

BRIEF DESCRIPTION OF THE DRAWINGS

The above and other objects, features and other advantages of the present disclosure will be more clearly understood from the following detailed description taken in conjunction with the accompanying drawings, in which:

FIG. 1 is a schematic plan view illustrating a lithium secondary battery according to exemplary embodiments; and
FIG. 2 is a cross-sectional view illustrating a lithium secondary battery according to exemplary embodiments.

DETAILED DESCRIPTION

Non-limiting embodiments according to the disclosure of the present application provide a cathode active material precursor for a secondary battery (hereinafter, also abbreviated as a "cathode active material precursor"). In addition, a cathode active material for a secondary battery (hereinafter, also abbreviated as a "cathode active material"), manufactured using the cathode active material precursor, and a secondary battery (hereinafter, also abbreviated as a "secondary battery") comprising the cathode active material, are provided.

For example, the cathode active material precursor may refer to a material that serves as a raw material for the cathode active material or a material at a stage prior to conversion into the cathode active material.

Hereinafter, embodiments of the present disclosure will be described in detail with reference to the drawings. However, the embodiments are merely illustrative, and the present disclosure is not limited to the specific embodiments described by way of example.

In some non-limiting embodiments, the cathode active material precursor may comprise transition metal hydroxide particles. For example, the cathode active material precursor may comprise a plurality of transition metal hydroxide particles.

In some non-limiting embodiments, the transition metal hydroxide particles may comprise nickel (Ni). For example, the cathode active material precursor or the transition metal hydroxide particles may comprise a layered structure or a crystal structure represented by Formula 1 below.

$$[\text{Formula 1}] \qquad Ni_aM_b(OH)_{2+z}$$

In Formula 1, a, b and z may satisfy $0.5 \leq a \leq 0.99$, $0.01 \leq b \leq 0.5$, and $-0.5 \leq z \leq 0.1$. M may comprise Co, Mn and/or Al.

The chemical structure represented by Formula 1 indicates a bonding relationship between elements comprised in the layered structure or crystal structure of the cathode active material precursor or the transition metal hydroxide particles, and does not exclude other additional elements. For example, M comprises Co, Mn and/or Al, and Co, Mn and/or Al may be provided as main active elements of the cathode active material together with Ni. Here, it should be understood that Formula 1 is provided to express the bonding relationship between the main active elements, and is a formula encompassing the introduction and substitution of additional elements.

In some non-limiting embodiments, auxiliary elements may be further comprised, which are added to the main active elements to enhance the chemical stability of the cathode active material precursor or the layered structure/crystal structure. The auxiliary elements may be incorporated into the layered structure/crystal structure together with the main active elements to form a bond, and it should be understood that this case is also comprised within the chemical structure range represented by Formula 1.

The auxiliary element may comprise at least one selected from the group consisting of, for example, Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, La and Zr. The auxiliary element may also act as an auxiliary active element which contributes to the capacity/output activity of the cathode active material together with, for example, Co or Mn, such as Al.

For example, the cathode active material precursor or the transition metal hydroxide particles may comprise a layered structure or a crystal structure represented by Formula 1-1 below.

$$[\text{Formula 1-1}] \qquad Ni_aM1_{b1}M2_{b2}(OH)_{2+z}$$

In Formula 1-1, M1 may comprise Co, Mn and/or Al. M2 may comprise the above-described auxiliary elements. In Formula 1-1, a, b1, b2 and z may satisfy $0.5 \leq a \leq 0.99$, $0.01 \leq b1+b2 \leq 0.5$, and $-0.5 \leq z \leq 0.1$.

In some non-limiting embodiments, the transition metal hydroxide particles may further comprise a doping element and/or a coating element. For example, elements which are substantially the same as or similar to the above-described auxiliary elements may be used as the doping element and/or the coating element. For example, the above-described elements may be used alone or in combination of two or more thereof as the doping element and/or the coating element.

In some non-limiting embodiments, the coating element and/or the doping element may exist on the surface of the transition metal hydroxide particles, or may also penetrate through the surface of the transition metal hydroxide particles to become incorporated into the bonding structure represented by Formula 1 or Formula 1-1.

In some non-limiting embodiments, the cathode active material precursor may comprise a nickel-cobalt-manganese (NCM)-based hydroxide. In this case, an NCM-based hydroxide having an increased nickel content may be used.

Ni may be provided as a transition metal associated with the output and capacity of the secondary battery. Therefore, as described above, by employing a high-content (high-Ni) composition in the cathode active material precursor, a high-capacity cathode and a high-capacity secondary battery may be provided.

However, as the content of Ni is increased, long-term storage stability and cycle life stability of the cathode or the secondary battery may be relatively decreased, and side reactions with the electrolyte may also be increased. However, according to some non-limiting embodiments, the cycle life stability and capacity retention characteristics may be improved through Mn while maintaining electrical conductivity by comprising Co.

The content of Ni (e.g., the molar fraction of nickel based on the total moles of nickel, cobalt and manganese) in the NCM-based hydroxide may be 0.5 or more, 0.6 or more, 0.7 or more, 0.8 or more, 0.9 or more, or 0.95 or more. In some non-limiting embodiments, the content of Ni may be 0.8 to 0.98, 0.82 to 0.98, 0.83 to 0.98, 0.84 to 0.98, 0.85 to 0.98, 0.88 to 0.98, or 0.9 to 0.98.

In some non-limiting embodiments, an X-ray diffraction (XRD) peak intensity ratio, defined by Equation 1 below, of the transition metal hydroxide particles may be 0.7 to 1.3, and in some embodiments, 0.894 to 1.296 or 1.207 to 1.296.

[Equation 1]

$$\text{XRD peak intensity ratio} = I(101)/I(001)$$

In Equation 1, I(101) represents a peak intensity of a (101) plane of the transition metal hydroxide particles obtained through XRD analysis, and I(001) represents a peak intensity of a (001) plane of the transition metal hydroxide particles obtained through XRD analysis.

The intensity of the peak may represent the maximum height of the peak in the XRD analysis graph.

For example, the XRD analysis may be performed on dried powder of the transition metal hydroxide particles using Cu K$\alpha$ rays as a light source, within a diffraction angle ($2\theta$) range of 10° to 120°, at a scan rate of 0.0065°/step.

Within the above XRD peak intensity ratio range, the width of the lithium ion diffusion path (Li diffusion channel) of the cathode active material prepared using the cathode active material precursor may increase, and the structural stability may be improved. Accordingly, all the capacity characteristics, output characteristics, and cycle life characteristics of the secondary battery may be enhanced.

In some non-limiting embodiments, the crystal grain size in the (001) plane direction of the transition metal hydroxide particles, measured by XRD analysis, may be 10 nm to 18 nm, and in some embodiments, 10.4 nm to 17.8 nm, or 15.3 nm to 17.5 nm. Within the above range, the mobility of lithium ions in the cathode active material prepared using the cathode active material precursor may be improved, and/or the mechanical strength may be enhanced. Accordingly, particle cracks in the cathode active material and/or side reactions with the electrolyte may be suppressed, and both the cycle life characteristics and capacity characteristics may be improved.

In some non-limiting embodiments, the crystal grain size in a (001) plane direction may be calculated using the Scherrer equation (Equation 2 below) with the full width at half maximum (FWHM) obtained through XRD analysis.

[Equation 2]

$$D = \frac{0.9\lambda}{\beta \cos\theta}$$

In Equation 2, D represents the crystal grain size, $\lambda$ represents the X-ray wavelength, $\beta$ represents the full width at half maximum of the peak of the (001) plane, and $\theta$ represents the diffraction angle.

In some non-limiting embodiments, $\beta$ in Equation 2 above may use a full width at half maximum corrected for instrument-derived broadening. In some non-limiting embodiments, Si may be used as a standard material to reflect the instrument-derived contribution. In this case, by fitting the FWHM profile across the full $2\theta$ range of Si, the instrument-derived FWHM may be expressed as a function of $2\theta$. Thereafter, a corrected value obtained by subtracting the instrument-derived FWHM at the corresponding $2\theta$ from the measured FWHM may be used as $\beta$.

For example, the XRD peak intensity ratio and/or the crystal grain size in the (001) plane direction may be comprehensively adjusted according to conditions such as the size and the composition of the transition metal hydroxide particles, the mixing temperature, the mixing time, the heat treatment temperature, the heat treatment time, and whether or not it is doped or coated. For example, the XRD peak intensity ratio and/or the crystal grain size in the (001) plane direction may not solely depend on some of the conditions.

In some non-limiting embodiments, the transition metal hydroxide particles may have a median particle diameter (D50) of 2 $\mu$m to 4 $\mu$m, or 3.5 $\mu$m to 3.9 $\mu$m. Within the above range, the capacity characteristics and capacity retention rate of the secondary battery may be improved.

As used herein, the term "median particle diameter," "D50" or "median particle diameter (D50)" may refer to the particle diameter at which the cumulative volume percentage in the particle size distribution, obtained based on particle volume, reaches 50%.

In some non-limiting embodiments, the oxygen position (Zox) in the lattice of the transition metal hydroxide particles, obtained by the Rietveld refinement method through XRD analysis, may be 0.2168 to 0.2252, and in some non-limiting embodiments, 0.2238 to 0.2244. Within the above range, the position of oxygen within the crystal structure of the transition metal hydroxide particles may be sufficiently separated, thereby improving the mobility of lithium ions, while enhancing structural stability. Accordingly, the capacity characteristics, output characteristics, and cycle life characteristics of the secondary battery may be further improved.

According to the Rietveld refinement method, the lattice structure may be measured by comparing the XRD pattern obtained by actually measuring a material to be analyzed with the XRD pattern of a sample with known structural information.

For example, the XRD pattern of the material to be analyzed may be measured, and the measured XRD pattern may be compared with the XRD pattern of the corresponding material registered in the online database (Inorganic Crystal Structure Database (ICSD), https://icsd.products.fiz-karlsruhe.de/en/products/icsd-products) to determine the lattice structure.

For example, the XRD analysis may be performed on the transition metal hydroxide particles to obtain the XRD pattern, and the Zox may be measured by analyzing the XRD pattern based on the XRD pattern of the reference code ICSD 98-016-9978 for $Ni(OH)_2$ registered in the online database. For example, the Rietveld refinement may be performed using TOPAS software from Bruker.

In some non-limiting embodiments, the transition metal hydroxide particles may comprise a single particle form or a secondary particle form formed by aggregation of a plurality of primary particles.

In some non-limiting embodiments, the transition metal hydroxide particles may comprise a secondary particle form formed by aggregation or assembly of a plurality of primary particles.

In some non-limiting embodiments, lithium-transition metal oxide particles may be prepared using a cathode active material precursor comprising the above-described transition metal hydroxide particles.

The cathode active material may comprise the lithium-transition metal oxide particles. For example, the cathode active material may comprise a plurality of the lithium-transition metal oxide particles.

In some non-limiting embodiments, the lithium-transition metal oxide particles may comprise a single particle form. Accordingly, the mechanical and/or chemical stability of the cathode active material may be enhanced. When the lithium-transition metal oxide particles are prepared using the above-described cathode active material precursor, deterioration in capacity characteristics despite the single particle form may be suppressed. Accordingly, a cathode active material having improved capacity characteristics and/or cycle life characteristics may be provided.

For example, transition metal hydroxide particles comprising a secondary particle form and a lithium precursor may be mixed and calcined to form lithium-transition metal oxide particles having a single particle form.

In some non-limiting embodiments, the lithium-transition metal oxide particles may have a substantially single particle form.

The term "single particle form" as used herein is used to, for example, exclude secondary particles formed by aggregation of a plurality of primary particles. For example, in the lithium-transition metal oxide particles, a secondary-particle structure in which (e.g., greater than 10, 20 or more, 30 or more, 40 or more, 50 or more, etc.) of primary particles are assembled or agglomerated may be excluded.

The term "single particle form" as used herein does not exclude a structure in which 2 to 10 single particles are simply attached to or in contact with each other without being aggregated into a monolithic shape.

For example, the lithium-transition metal oxide particles may have a granular or spherical single particle form.

In some non-limiting embodiments, the cathode active material or the lithium-transition metal oxide particles may comprise a layered structure or a crystal structure represented by Formula 2 below.

$$[Formula\ 2] \qquad Li_xNi_aM_bO_{2+z}$$

In Formula 2, x, a, b and z may satisfy $0.9 \le x \le 1.2$, $0.5 \le a \le 0.99$, $0.01 \le b \le 0.5$, and $-0.5 \le z \le 0.1$. M may comprise Co, Mn and/or Al.

The chemical structure represented by Formula 2 indicates a bonding relationship between elements comprised in the layered structure or crystal structure of the cathode active material or the lithium-transition metal oxide particles, and does not exclude other additional elements. For example, M comprises Co, Mn and/or Al, and Co, Mn and/or Al may be provided as main active elements of the cathode active material together with Ni. Here, it should be understood that Formula 2 is provided to express the bonding relationship between the main active elements, and is a formula encompassing the introduction and substitution of additional elements.

In some non-limiting embodiments, the above-described auxiliary elements may be further comprised, which are added to the main active elements.

For example, the cathode active material or the lithium-transition metal oxide particles may comprise a layered structure or crystal structure represented by Formula 2-1 below.

$$[Formula\ 2-1] \qquad Li_xNi_aM1_{b1}M2_{b2}O_{2+z}$$

In Formula 2-1, M1 may comprise Co, Mn and/or Al. M2 may comprise the above-described auxiliary elements. In Formula 2-1, x, a, b1, b2 and z may satisfy $0.9 \leq x \leq 1.2$, $0.5 \leq a \leq 0.99$, $0.01 \leq b1+b2 \leq 0.5$, and $-0.5 \leq z \leq 0.1$.

In some non-limiting embodiments, the cathode active material may further comprise a doping element and/or a coating element. For example, elements which are substantially the same as or similar to the above-described auxiliary elements may be used as the doping element and/or the coating element. For example, the above-described elements may be used alone or in combination of two or more thereof as the doping element or the coating element.

The doping element or the coating element may exist on the surface of the lithium-transition metal oxide particles, or may penetrate through the surface of the lithium-transition metal oxide particles to become incorporated into the bonding structure represented by Formula 2 or Formula 2-1.

The cathode active material may comprise a nickel-cobalt-manganese (NCM)-based lithium oxide. In this case, an NCM-based lithium oxide having an increased nickel content may be used.

The content of Ni (e.g., the molar fraction of nickel based on the total moles of nickel, cobalt and manganese) in the NCM-based lithium oxide may be 0.5 or more, 0.6 or more, 0.7 or more, 0.8 or more, 0.9 or more, or 0.95 or more. In some non-limiting embodiments, the content of Ni may be 0.8 to 0.98, 0.82 to 0.98, 0.83 to 0.98, 0.84 to 0.98, 0.85 to 0.98, 0.88 to 0.98, or 0.9 to 0.98.

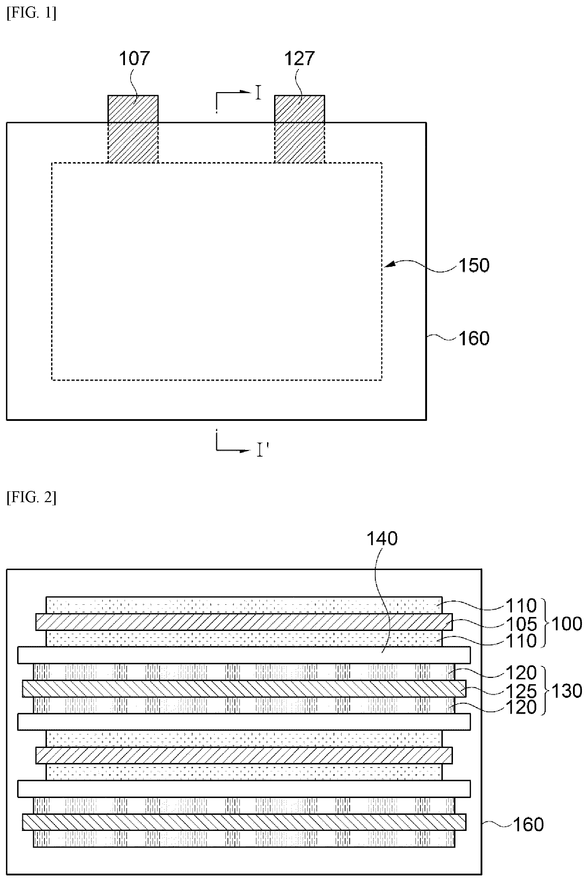

FIGS. 1 and 2 are schematic plan and cross-sectional views illustrating a lithium secondary battery according to some non-limiting exemplary embodiments, respectively. For example, FIG. 2 is a cross-sectional view taken along line I-I' of FIG. 1 in the thickness direction.

The structures illustrated in FIGS. 1 and 2 are examples for the convenience of description, and the structure of the lithium secondary battery according to some non-limiting embodiments of the present disclosure is not limited thereto.

Referring to FIGS. 1 and 2, the secondary battery may comprise a cathode 100 comprising the above-described cathode active material and an anode 130 disposed to face the cathode 100.

The cathode 100 may comprise a cathode active material layer 110 formed by applying a cathode active material to at least one surface of a cathode current collector 105.

The cathode current collector 105 may comprise stainless steel, nickel, aluminum, titanium, or an alloy thereof. The cathode current collector 105 may also comprise aluminum or stainless steel whose surface has been treated with carbon, nickel, titanium or silver. In some non-limiting embodiments, the cathode current collector 105 may have a thickness of 10 μm to 50 μm.

The cathode active material layer 110 may comprise the above-described cathode active material.

The cathode active material may comprise a plurality of the lithium-transition metal oxide particles. For example, the total content of the lithium-transition metal oxide particles based on the total weight of the cathode active material may be 50 wt% or more. In some non-limiting embodiments, the total content of the lithium-transition metal oxide particles based on the total weight of the cathode active material may be 60 wt% or more, 70 wt% or more, 80 wt% or more, or 90 wt% or more.

In some non-limiting embodiments, the cathode active material may be substantially composed of the lithium-transition metal oxide particles.

The cathode active material may be mixed in a solvent to prepare a cathode slurry. The cathode slurry may be coated on at least one surface of the cathode current collector 105, then dried and roll-pressed to prepare the cathode active material layer 110. The coating may comprise a method such as gravure coating, slot die coating, simultaneous multilayer die coating, imprinting, doctor blade coating, dip coating, bar coating or casting. The cathode active material layer 110 may further comprise a binder, and optionally further comprise a conductive material, a thickener or the like.

As the solvent, N-methyl-2-pyrrolidone (NMP), dimethylformamide, dimethylacetamide, N,N-dimethylaminopropylamine, ethylene oxide, tetrahydrofuran, and the like may be used.

The binder may comprise polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) and the like. These may be used alone or in combination of two or more thereof.

In some non-limiting embodiments, a PVDF-based binder may be used as the cathode binder. In this case, the amount of binder for forming the cathode active material layer 110 may be decreased and the amount of the cathode active material may be relatively increased. Accordingly, the output characteristics and capacity characteristics of the secondary battery may be improved.

The conductive material may be added to the cathode active material layer 110 in order to enhance the conductivity thereof and/or the mobility of lithium ions or electrons. For example, the conductive material may comprise carbon-based conductive materials such as graphite, carbon black, acetylene black, Ketjen black, graphene, vapor-grown carbon fibers (VGCFs), carbon nanotubes (CNTs) carbon fibers, and/or metal-based conductive materials, comprising perovskite materials, such as tin, tin oxide, titanium oxide, $LaSrCoO_3$, and $LaSrMnO_3$. These may be used alone or in combination of two or more thereof.

The cathode slurry may further comprise a thickener and/or dispersant. In some embodiments, the cathode slurry may comprise a thickener such as carboxymethyl cellulose (CMC).

The anode 130 may comprise an anode current collector 125, and an anode active material layer 120 formed on at least one surface of the anode current collector 125.

For example, the anode current collector 125 may comprise a copper foil, a nickel foil, a stainless steel foil, a titanium foil, a nickel foam, a copper foam, a polymer substrate coated with conductive metal and the like. These may be used alone or in combination of two or more thereof. In some non-limiting embodiments, the anode current collector 125 may have a thickness of 10 $\mu$m to 50 $\mu$m.

The anode active material layer 120 may comprise an anode active material. As the anode active material, a material capable of intercalating and deintercalating lithium ions may be used. In some non-limiting embodiments, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material, etc. may be used. These may be used alone or in combination of two or more thereof.

In some non-limiting embodiments, the amorphous carbon may comprise hard carbon, soft carbon, cokes, mesocarbon microbead (MCMB), and/or mesophase pitch-based carbon fiber (MPCF) or the like.

In some non-limiting embodiments, the crystalline carbon may comprise graphite-based carbon such as natural graphite, artificial graphite, graphite cokes, graphite MCMB, and/or graphite MPCF or the like.

In some non-limiting embodiments, the lithium metal may comprise pure lithium metal and/or lithium metal having a protective layer formed thereon for suppressing dendrite growth and the like. In some non-limiting embodiments, a lithium metal-containing layer deposited or coated on the anode current collector 125 may also be used as the anode active material layer 120. In some non-limiting embodiments, a lithium thin film layer may also be used as the anode active material layer 120.

In some non-limiting embodiments, elements contained in the lithium alloy may comprise aluminum, zinc, bismuth, cadmium, antimony, silicon, lead, tin, gallium, and/or indium, etc. These may be used alone or in combination of two or more thereof.

The silicon-containing material may provide further increased capacity characteristics. In some non-limiting embodiments, the silicon-containing material may comprise Si, $SiO_x$ (0<x<2), metal-doped $SiO_x$ (0<x<2), and/or a silicon-carbon composite, etc.

In some non-limiting embodiments, the metal may comprise lithium and/or magnesium, and the metal-doped $SiO_x$ (0<x<2) may comprise a metal silicate.

The anode active material may be mixed in a solvent to prepare an anode slurry. The anode slurry may be coated or deposited on the anode current collector 125, and then dried and roll-pressed to prepare the anode active material layer 120. The coating may comprise processes such as gravure coating, slot die coating, simultaneous multilayer die coating, imprinting, doctor blade coating, dip coating, bar coating or casting, etc. The anode active material layer 120 may further comprise a binder, and optionally may further comprise a conductive material, a thickener or the like.

The solvent comprised in the anode slurry may comprise water, pure water, deionized water, distilled water, ethanol, isopropanol, methanol, acetone, n-propanol, t-butanol and the like. These may be used alone or in combination of two or more thereof.

The above-described materials that can be used when preparing the cathode 100 as the binder, conductive material and thickener may also be used for the anode in similar amounts.

In some non-limiting embodiments, a styrene-butadiene rubber (SBR)-based binder, carboxymethyl cellulose (CMC), polyacrylic acid-based binder, poly(3,4-ethylenedioxythiophene) (PEDOT)-based binder, and/or the like may be used as an anode binder. These may be used alone or in combination of two or more thereof.

In some non-limiting embodiments, a separation membrane 140 may be interposed between the cathode 100 and the anode 130. The separation membrane 140 may be configured to prevent an electrical short-circuit between the cathode 100 and the anode 130, and to allow the flow of ions. For example, the separation membrane may have a thickness of 10 $\mu$m to 20 $\mu$m.

In some non-limiting embodiments, the separation membrane 140 may comprise a porous polymer film or a porous nonwoven fabric.

In some non-limiting embodiments, the porous polymer film may comprise a polyolefin-based polymer such as an ethylene polymer, a propylene polymer, an ethylene/butene copolymer, an ethylene/hexene copolymer, and an ethylene/methacrylate copolymer, etc. These may be used alone or in combination of two or more thereof.

In some non-limiting embodiments, the porous nonwoven fabric may comprise glass fibers having a high melting point, polyethylene terephthalate fibers, etc.

In some non-limiting embodiments, the separation membrane 140 may also comprise a ceramic-based material. For example, inorganic particles may be coated on the polymer film or dispersed within the polymer film to improve heat resistance.

In some non-limiting embodiments, the separation membrane 140 may have a single-layer or multi-layer structure comprising the above-described polymer film and/or non-woven fabric.

According to some non-limiting embodiments, an electrode cell may be defined by the cathode 100, the anode 130 and the separation membrane 140, and a plurality of electrode cells may be stacked to form, for example, a jelly roll type electrode assembly 150. For example, the electrode assembly 150 may be formed by winding, stacking, z-folding, or stack-folding the separation membrane 140.

The electrode assembly 150 may be accommodated in a case 160 together with the electrolyte to define a lithium secondary battery. According to some non-limiting embodiments, a non-aqueous electrolyte may be used as the electrolyte.

The non-aqueous electrolyte may comprise a lithium salt of an electrolyte and an organic solvent, the lithium salt is represented by, for example, $Li^+X^-$, and as an anion $(X^-)$ of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2$ $(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and/or $(CF_3CF_2SO_2)_2N^-$, etc. may be exemplified.

As the organic solvent, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, gamma-butyrolactone, and/or propylene sulfite, and/or the like may be used. These may be used alone or in combination of two or more thereof.

The non-aqueous electrolyte may further comprise an additive. The additive may comprise, for example, a cyclic carbonate compound, a fluorine-substituted carbonate compound, a sultone compound, a cyclic sulfate compound, a cyclic sulfite compound, a phosphate compound, and/or a borate compound and/or the like. These may be used alone or in combination of two or more thereof.

The cyclic carbonate compound may comprise vinylene carbonate (VC), vinyl ethylene carbonate (VEC), etc.

The fluorine-substituted carbonate compound may comprise fluoroethylene carbonate (FEC), etc.

The sultone compound may comprise 1,3-propane sultone, 1,3-propene sultone, and/or 1,4-butane sultone, etc.

The cyclic sulfate compound may comprise 1,2-ethylene sulfate, and/or 1,2-propylene sulfate, etc.

The cyclic sulfite compound may comprise ethylene sulfite, and/or butylene sulfite, etc.

The phosphate compound may comprise lithium difluoro bis(oxalato) phosphate, and/or lithium difluoro phosphate, etc.

The borate compound may comprise lithium bis(oxalate) borate, etc.

In some non-limiting embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathode 100 and the anode 130 in place of the above-described separation membrane 140.

The solid electrolyte may comprise a sulfide-based electrolyte. As a non-limiting example, the sulfide-based electrolyte may comprise $Li_2S-P_2S_5$, $LizS-P_2S_s-LiCl$, $Li_2S-P_2S_5-LiBr$, $Li_2S-P_2S_5-LiCl-LiBr$, $Li_2S-P_2S_5-Li2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, Z is Ge, Zn or Ga), $Li_2S-GeS_2$, $Li_2S-SiS_2-Li_3PO_4$, $Li_2S-SiS_2-Li_pMO_q$ (p and q are positive numbers, M is P, Si, Ge, B, Al, Ga or In), $Li_7-xPS_6-xCl_x$ $(0{\leq}x{\leq}2)$, $Li_7-xPS_6-xBr_x$ $(0{\leq}x{\leq}2)$, $Li_7-xPS_6-xI_x$ $(0{\leq}x{\leq}2)$, etc. These may be used alone or in combination of two or more thereof.

In one non-limiting embodiment, the solid electrolyte may comprise an oxide-based amorphous solid electrolyte, such as, for example, $Li_2O-B_2O_3-P_2O_5$, $Li_2O-SiO_2$, $Li_2O-B_2O_3$, $Li_2O-B_2O_3-ZnO$, etc.

As shown in FIGS. 1 and 2, electrode tabs (cathode tabs and anode tabs) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) that extend or are exposed to the outside of the case 160.

The lithium secondary battery may be manufactured, for example, in a cylindrical shape using a can, a prismatic shape, a pouch shape or a coin shape.

Example **1**

(1) Preparation of transition metal hydroxide particles

Distilled water was placed in a reactor at 65 °C, and internal dissolved oxygen was removed by bubbling $N_2$ through it for 24 hours, after which NaOH and $NH_3 \cdot H_2O$ were added so that the pH became 12.0. While stirring the aqueous solution in the reactor at a constant speed, NaOH and $NH_3 \cdot H_2O$ were continuously added as a precipitant and a chelating agent and a transition metal mixture solution containing $NiSO_4$, $CoSO_4$ and $MnSO_4$ in a molar ratio of 8:1:1 was continuously added. At this time, the transition metal and $NH_3 \cdot H_2O$ were added so as to have a molar ratio(the molar of total transition metal: the molar of $NH_3 \cdot H_2O$) of 1:2. A co-precipitation reaction was performed for 48 hours to obtain $Ni_{0.8}Co_{0.1}Mn_{0.1}(OH)_2$ comprising a secondary particle form as transition metal hydroxide particles. The transition metal hydroxide particles were dried at 120 °C for 10 hours.

(2) Preparation of lithium-transition metal oxide particles

The transition metal hydroxide particles were used as a cathode active material precursor.

Lithium hydroxide and the cathode active material precursor were added to a dry high-speed mixer at a ratio of 1.03:1, and uniformly mixed for 20 minutes. The mixture was placed in a calcination furnace, heated to 850 °C at a heating rate of 2 °C/min, and calcined at 850 °C for 12 hours. Oxygen gas was continuously supplied at a flow rate of 10 mL/min during the heating and calcination. After completion of the calcination, the product was naturally cooled to room temperature, and then pulverized and classified to prepare lithium-transition metal oxide particles ($LiNi_{0.8}Co_{0.1}Mn_{0.1}O_2$) having a single particle form.

(3) Manufacture of secondary battery

The lithium-transition metal oxide particles were used as a cathode active material to manufacture a lithium secondary battery.

Specifically, the cathode active material, carbon black (Denka Black) as a conductive material, and polyvinylidene fluoride (PVDF) as a binder were mixed in a mass ratio of 93:5:2 to prepare a cathode slurry. The cathode slurry was applied to an aluminum current collector, then dried and roll-pressed to fabricate a cathode.

Lithium metal was used as an anode active material.

The cathode and anode prepared as described above were each notched into circular shapes having diameters of $\Phi 14$ and $\Phi 16$, respectively, and laminated with a separation membrane (polyethylene, thickness: 13 $\mu$m) notched into $\Phi 19$ interposed between the cathode and the anode to form an electrode cell. $\Phi N$ (N is a positive number) may denote a circular shape having a diameter of N mm.

The electrode cell was placed in a coin cell outer case of a standard (CR2032) having a diameter of 20 mm and a height of 3.2 mm, followed by electrolyte injection and assembly. Thereafter, aging was carried out for 12 hours or more to allow the electrolyte to be impregnated into the electrode.

A 1M $LiPF_6$ solution prepared using a mixed solvent of EC/EMC (1/2; volume ratio) was used as the electrolyte.

Formation charging and discharging were performed on the secondary battery manufactured as described above (charging conditions: CC-CV 0.1C 4.3V 0.05C CUT-OFF, discharging conditions: CC 0.1C 2.5V CUT-OFF).

**Example 2**

A cathode active material precursor, a cathode active material, and a secondary battery were manufactured in the same manner as in Example 1, except that the reactor temperature was changed to 60 °C and the molar ratio of the transition metal to $NH_3 \cdot H_2O$ was changed to 1:3.

**Example 3**

A cathode active material precursor, a cathode active material, and a secondary battery were manufactured in the same manner as in Example 1, except that the co-precipitation time was changed to 36 hours.

**Example 4**

A cathode active material precursor, a cathode active material, and a secondary battery were manufactured in the same manner as in Example 1, except that the reactor temperature was changed to 60 °C, the internal pH of the reactor was changed to 12.5, the molar ratio of the transition metal to $NH_3 \cdot H_2O$ was changed to 1:3, and the amount of the transition metal added was reduced to 90% compared to Example 1.

**Example 5**

A cathode active material precursor, a cathode active material, and a secondary battery were manufactured in the same manner as in Example 1, except that the reactor temperature was changed to 55 °C, the internal pH of the reactor was changed to 12.5, and the amount of the transition metal added was adjusted to 80 wt% of the amount used in Example 1.

**Example 6**

A cathode active material precursor, a cathode active material, and a secondary battery were manufactured in the same manner as in Example 1, except that the molar ratio of the transition metal to $NH_3 \cdot H_2O$ was changed to 1:1.5.

**Example 7**

A cathode active material precursor, cathode active material, and secondary battery were manufactured in the same manner as in Example 1, except that the reactor temperature was changed to 70 °C and the molar ratio of the transition metal to $NH_3 \cdot H_2O$ was changed to 1:1.5.

**Example 8**

A cathode active material precursor, a cathode active material, and a secondary battery were manufactured in the same manner as in Example 1, except that the reactor temperature was changed to 55 °C, the internal pH of the reactor was changed to 12.5, the molar ratio of the transition metal to $NH_3 \cdot H_2O$ was changed to 1:3, and the amount of the transition metal added was adjusted to 90 wt% of the amount used in Example 1.

**Example 9**

A cathode active material precursor, a cathode active material, and a secondary battery were manufactured in the same manner as in Example 1, except that the reactor temperature was changed to 55 °C, the co-precipitation time was changed to 36 hours, the internal pH of the reactor was changed to 13.0, and the amount of the transition metal added was adjusted to 80 wt% of the amount used in Example 1.

**Example 10**

A cathode active material precursor, a cathode active material, and a secondary battery were manufactured in the same manner as in Example 1, except that the co-precipitation time was changed to 60 hours, the internal pH of the reactor was changed to 11.5, and the molar ratio of the transition metal to $NH_3 \cdot H_2O$ was changed to 1:3.

**Comparative Example 1**

A cathode active material precursor, a cathode active material, and a secondary battery were manufactured in the same manner as in Example 1, except that the reactor temperature was changed to 55 °C and the molar ratio of the transition metal to $NH_3 \cdot H_2O$ was changed to 1:3.

**Comparative Example 2**

A cathode active material precursor, a cathode active material, and a secondary battery were manufactured in the same manner as in Example 1, except that the reactor temperature was changed to 60 °C and the molar ratio of the transition metal to $NH_3 \cdot H_2O$ was changed to 1:1.5.

**Comparative Example 3**

A cathode active material precursor, a cathode active material, and a secondary battery were manufactured in the same manner as in Example 1, except that the co-precipitation time was changed to 36 hours, the internal pH of the reactor was changed to 12.5, and the molar ratio of the transition metal to $NH_3 \cdot H_2O$ was changed to 1:3.

**Comparative Example 4**

A cathode active material precursor, a cathode active material, and a secondary battery were manufactured in the same manner as in Example 1, except that the reactor temperature was changed to 70 °C and the amount of the transition metal added was adjusted to 90 wt% of the amount used in Example 1.

**Experimental Example**

(1) XRD Analysis

1) Measurement of XRD peak intensity ratio

The transition metal hydroxide particles of the above-described examples and comparative examples were analyzed by XRD under the conditions shown in Table 1 to measure a peak intensity of a (101) plane (I(101)) and a peak intensity of a (001) plane (I(001)).

The measurement results were substituted into Equation 1 to calculate the XRD peak intensity ratio.

2) Measurement of crystal grain size in the (001) plane direction

The transition metal hydroxide particles of the above-described examples and comparative examples were subjected to XRD analysis under the conditions shown in Table 1, and the crystal grain size in the (001) plane direction was calculated by substituting the analysis results into Equation 2.

3) Measurement of oxygen position (Zox) in the lattice

The transition metal hydroxide particles of the above-described examples and comparative examples were subjected to XRD analysis under the conditions shown in Table 1, and the Rietveld refinement method through the XRD analysis was performed to measure Zox.

Specifically, XRD analysis was performed on the transition metal hydroxide particles to obtain an XRD pattern.

The XRD pattern data were analyzed based on the XRD pattern of the reference code (ICSD 98-016-9978) of $Ni(OH)_2$ registered in the online database (ICSD, https://icsd.products.fiz-karlsruhe.de/en/products/icsd-products) to measure Zox. Specifically, the Rietveld refinement was performed using TOPAS software from Bruker.

Specific XRD analysis equipment and conditions are described in Table 1 below.

[TABLE 1]

| XRD (X-Ray Diffractometer) | |
|---|---|
| Maker | PANalytical |
| Model | EMPYREAN |
| Anode material | Cu |
| K-Alpha1 wavelength | 1.540598 A |
| Generator voltage | 45 kV |
| Tube current | 40 mA |
| Scan range | 10 - 70° |
| Scan step size | 0.0065° |
| Divergence slit | 1/4° |
| Antiscatter slit | 1° |

(2) Measurement of median particle diameter (D50) of cathode active material precursor

The median particle diameter (D50) of the transition metal hydroxide particles of the above-described examples and comparative examples was measured using a particle size analyzer (PSA) (S3500 from Microtrac).

(3) Measurement of initial charge capacity and initial discharge capacity

The secondary batteries of the above-described examples and comparative examples were each charged (CC-CV 0.1C 4.3V 0.005C CUT-OFF) and discharged (CC 0.1C 3.0V CUT-OFF) once at room temperature (25 °C), and the initial charge capacity and initial discharge capacity were measured.

(4) Evaluation of capacity retention rate (150 cycles)

The lithium secondary batteries of the above-described examples and comparative examples were each charged (CC-CV 0.5C 4.3V 0.05C CUT-OFF) and discharged (CC 1.0C 3.0V CUT-OFF) for 150 cycles at room temperature (25 °C). The discharge capacity at the 150th cycle was divided by the discharge capacity at the 1st cycle, and the result was multiplied by 100 to evaluate the capacity retention rate.

The measurement and evaluation results are shown in Table 2 and Table 3.

The XRD peak intensity ratio, crystal grain size in the (001) plane direction, oxygen position (Zox) in the lattice, and median particle diameter (D50) of the transition metal hydroxide particles of the examples and comparative examples are shown in Table 2 below.

[TABLE 2]

|  | XRD peak intensity ratio | Crystal grain size (nm) | Zox | Median particle diameter (D50) ($\mu$m) |
|---|---|---|---|---|
| Example 1 | 1.245 | 17.5 | 0.2244 | 3.9 |
| Example 2 | 1.207 | 10.7 | 0.2238 | 4.0 |
| Example 3 | 0.894 | 16.8 | 0.2181 | 3.5 |
| Example 4 | 0.799 | 10.4 | 0.2168 | 3.1 |
| Example 5 | 0.705 | 15.3 | 0.2173 | 2.0 |
| Example 6 | 1.296 | 17.8 | 0.2252 | 3.7 |
| Example 7 | 1.284 | 18.0 | 0.2254 | 3.8 |
| Example 8 | 0.711 | 10.1 | 0.2165 | 2.7 |
| Example 9 | 0.734 | 16.5 | 0.2184 | 1.8 |
| Example 10 | 1.220 | 13.1 | 0.2239 | 4.2 |
| Comparative Example 1 | 0.693 | 10.5 | 0.2171 | 3.9 |
| Comparative Example 2 | 1.311 | 17.3 | 0.2250 | 3.8 |
| Comparative Example 3 | 1.106 | 9.8 | 0.2214 | 3.2 |
| Comparative Example 4 | 1.296 | 18.2 | 0.2251 | 3.5 |

[TABLE 3]

|  | initial charge capacity (mAh/g) | initial discharge capacity (mAh/g) | capacity retention rate(%) (150cyc) |
|---|---|---|---|
| Example 1 | 243.8 | 205.5 | 91.1 |
| Example 2 | 241.7 | 201.9 | 90.3 |
| Example 3 | 243.2 | 205.1 | 84.7 |
| Example 4 | 241.5 | 201.5 | 82.1 |
| Example 5 | 242.1 | 203.3 | 81.2 |
| Example 6 | 242.2 | 205.8 | 84.7 |
| Example 7 | 238.2 | 199.2 | 72.6 |
| Example 8 | 238.7 | 199.5 | 72.2 |
| Example 9 | 238.0 | 199.1 | 74.1 |
| Example 10 | 237.9 | 199.3 | 74.2 |
| Comparative Example 1 | 222.9 | 187.2 | 51.0 |
| Comparative Example 2 | 224.0 | 188.6 | 52.1 |
| Comparative Example 3 | 223.1 | 190.1 | 40.1 |
| Comparative Example 4 | 225.6 | 191.7 | 47.2 |

Referring to Table 2 and Table 3, in the examples in which the XRD peak intensity ratio was 0.7 to 1.3 and the crystal grain size in the (001) plane direction was 10 nm to 18 nm, the initial discharge capacity and capacity retention rate were improved compared to the comparative examples.

In examples 7 and 8 in which Zox was outside the range of 0.2168 to 0.2252, the initial discharge capacity and capacity retention rate were relatively reduced compared to the other examples.

In examples 9 and 10 in which the median particle diameter (D50) was outside the range of 2 $\mu$m to 4 $\mu$m, the initial discharge capacity and capacity retention rate were relatively reduced compared to the other examples.

The invention is also defined by the following aspects:

Aspect 1. A cathode active material precursor for a secondary battery, comprising transition metal hydroxide particles having a crystal grain size of 10 nm to 18 nm in a (001) plane direction as measured by X-ray diffraction (XRD) analysis, and an XRD peak intensity ratio of 0.7 to 1.3 as defined by Equation 1 below:

[Equation 1]

$$\text{XRD peak intensity ratio} = I(101)/I(001)$$

wherein I(101) represents a peak intensity of a (101) plane of the transition metal hydroxide particles obtained through XRD analysis, and I(001) represents a peak intensity of a (001) plane of the transition metal hydroxide particles obtained through XRD analysis.

Aspect 2. The cathode active material precursor for a secondary battery according to aspect 1, wherein the crystal grain size in the (001) plane direction is measured using Equation 2 below:

[Equation 2]

$$D = \frac{0.9\lambda}{\beta \cos\theta}$$

wherein D represents the crystal grain size, $\lambda$ represents the X-ray wavelength, $\beta$ represents the full width at half maximum of the peak of the (001) plane, and $\theta$ represents the diffraction angle.

Aspect 3. The cathode active material precursor for a secondary battery according to aspect 1 or 2, wherein the XRD peak intensity ratio is 1.207 to 1.296.

Aspect 4. The cathode active material precursor for a secondary battery according to any one of aspect 1 to 3, wherein the crystal grain size in the (001) plane direction is 15.3 nm to 17.5 nm.

Aspect 5. The cathode active material precursor for a secondary battery according to any one of aspect 1 to 4, wherein the transition metal hydroxide particles have a median particle diameter (D50) of 2 $\mu$m to 4 $\mu$m.

Aspect 6. The cathode active material precursor for a secondary battery according to any one of aspect 1 to 5, wherein the transition metal hydroxide particles have a median particle diameter (D50) of 3.5 $\mu$m to 3.9 $\mu$m.

Aspect 7. The cathode active material precursor for a secondary battery according to any one of aspect 1 to 6, wherein an oxygen position (Zox) in the lattice of the transition metal hydroxide particles, obtained by the Rietveld refinement method through XRD analysis, is 0.2168 to 0.2252.

Aspect 8. The cathode active material precursor for a secondary battery according to aspect 7, wherein Zox is 0.2238 to 0.2244.

Aspect 9. The cathode active material precursor for a secondary battery according to any one of aspect 1 to 8, wherein the transition metal hydroxide particles comprise nickel, cobalt and manganese.

Aspect 10. The cathode active material precursor for a secondary battery according to any one of aspect 1 to 9, wherein the transition metal hydroxide particles comprise a coating element and/or a doping element, and the coating element and/or doping element comprises at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, La and Zr.

Aspect 11. The cathode active material precursor for a secondary battery according to any one of aspect 1 to 10, wherein the transition metal hydroxide particles comprise a secondary particle form formed by aggregation of a plurality of primary particles.

Aspect 12. A cathode active material for a secondary battery, comprising lithium-transition metal oxide particles which are prepared from the cathode active material precursor according to any one of aspect 1 to 11.

Aspect 13. The cathode active material for a secondary battery according to aspect 12, wherein the lithium-transition metal oxide particles comprise a single particle form.

Aspect 14. A secondary battery comprising:

a cathode comprising the cathode active material for a secondary battery according to aspect 12 or 13; and

an anode disposed to face the cathode.

**Claims**

1. A cathode active material precursor for a secondary battery, comprising transition metal hydroxide particles having a crystal grain size of 10 nm to 18 nm in a (001) plane direction as measured by X-ray diffraction (XRD) analysis, and an XRD peak intensity ratio of 0.7 to 1.3 as defined by Equation 1 below:

[Equation 1]

$$\text{XRD peak intensity ratio} = I(101)/I(001)$$

   wherein I(101) represents a peak intensity of a (101) plane of the transition metal hydroxide particles obtained through XRD analysis, and I(001) represents a peak intensity of a (001) plane of the transition metal hydroxide particles obtained through XRD analysis.

2. The cathode active material precursor for a secondary battery according to claim 1, wherein the crystal grain size in the (001) plane direction is measured using Equation 2 below:

[Equation 2]

$$D = \frac{0.9\lambda}{\beta\cos\theta}$$

   wherein D represents the crystal grain size, $\lambda$ represents the X-ray wavelength, $\beta$ represents the full width at half maximum of the peak of the (001) plane, and $\theta$ represents the diffraction angle.

3. The cathode active material precursor for a secondary battery according to claim 1 or 2, wherein the XRD peak intensity ratio is 1.207 to 1.296.

4. The cathode active material precursor for a secondary battery according to any one of claims 1 to 3, wherein the crystal grain size in the (001) plane direction is 15.3 nm to 17.5 nm.

5. The cathode active material precursor for a secondary battery according to any one of claims 1 to 4, wherein the transition metal hydroxide particles have a median particle diameter (D50) of 2 $\mu$m to 4 $\mu$m.

6. The cathode active material precursor for a secondary battery according to any one of claims 1 to 5, wherein the transition metal hydroxide particles have a median particle diameter (D50) of 3.5 $\mu$m to 3.9 $\mu$m.

7. The cathode active material precursor for a secondary battery according to any one of claims 1 to 6, wherein an oxygen position (Zox) in the lattice of the transition metal hydroxide particles, obtained by the Rietveld refinement method through XRD analysis, is 0.2168 to 0.2252.

8. The cathode active material precursor for a secondary battery according to claim 7, wherein Zox is 0.2238 to 0.2244.

9. The cathode active material precursor for a secondary battery according to any one of claims 1 to 8, wherein the transition metal hydroxide particles comprise nickel, cobalt and manganese.

10. The cathode active material precursor for a secondary battery according to any one of claims 1 to 9, wherein the transition metal hydroxide particles comprise a coating element and/or a doping element, and
    the coating element and/or doping element comprises at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, La and Zr.

11. The cathode active material precursor for a secondary battery according to any one of claims 1 to 10, wherein the transition metal hydroxide particles comprise a secondary particle form formed by aggregation of a plurality of primary particles.

12. A cathode active material for a secondary battery, comprising lithium-transition metal oxide particles which are prepared from the cathode active material precursor according to any one of claims 1 to 11.

13. The cathode active material for a secondary battery according to claim 12, wherein the lithium-transition metal oxide particles comprise a single particle form.

14. A secondary battery comprising:

a cathode comprising the cathode active material for a secondary battery according to claim 12 or 13; and
an anode disposed to face the cathode.

[FIG. 1]

[FIG. 2]

Europäisches
Patentamt

European
Patent Office

Office européen
des brevets

# EUROPEAN SEARCH REPORT

**Application Number**

EP 25 19 6721

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG HONGWEI ET AL: "Synthesis of high-performance single-crystal LiNi0.8Co0.1Mn0.1O2 cathode materials by controlling solution super-saturation", JOURNAL OF POWER SOURCES, vol. 532, 26 March 2022 (2022-03-26), page 231037, XP093347330, AMSTERDAM, NL ISSN: 0378-7753, DOI: 10.1016/j.jpowsour.2022.231037 | 1 | INV. C01G53/50 |
| Y | * abstract * ----- | 1-14 | |
| X | CN 114 464 795 A (SK NEW TECH JOINT TYPE CONSULTATION) 10 May 2022 (2022-05-10) | 1 | |
| Y | * paragraph [[0126]] * ----- | 1-14 | |
| X | CN 113 764 656 A (SK INNOVATION CO LTD) 7 December 2021 (2021-12-07) | 1 | |
| Y | * paragraph [[0099]] * ----- | 1-14 | |
| X | CN 116 057 733 A (LG NEW ENERGY CO LTD) 2 May 2023 (2023-05-02) | 1 | **TECHNICAL FIELDS SEARCHED (IPC)** |
| Y | * examples 1-2 * ----- | 1-14 | C01G |

The present search report has been drawn up for all claims

| Place of search | Date of completion of the search | Examiner |
|---|---|---|
| Munich | 15 December 2025 | Timmermans, Michel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 4 699 987 A1**

## ANNEX TO THE EUROPEAN SEARCH REPORT
## ON EUROPEAN PATENT APPLICATION NO.

EP 25 19 6721

15-12-2025

| Patent document cited in search report | | Publication date | Patent family member(s) | | Publication date |
|---|---|---|---|---|---|
| CN 114464795 | A | 10-05-2022 | CN | 114464795 A | 10-05-2022 |
| | | | EP | 3995455 A1 | 11-05-2022 |
| | | | KR | 20220062974 A | 17-05-2022 |
| | | | KR | 20250162479 A | 18-11-2025 |
| | | | US | 2022149346 A1 | 12-05-2022 |
| CN 113764656 | A | 07-12-2021 | CN | 113764656 A | 07-12-2021 |
| | | | EP | 3919444 A2 | 08-12-2021 |
| | | | KR | 20210150863 A | 13-12-2021 |
| | | | US | 2021384502 A1 | 09-12-2021 |
| CN 116057733 | A | 02-05-2023 | CN | 116057733 A | 02-05-2023 |
| | | | EP | 4203100 A1 | 28-06-2023 |
| | | | JP | 7652891 B2 | 27-03-2025 |
| | | | JP | 2023542196 A | 05-10-2023 |
| | | | KR | 20220063757 A | 17-05-2022 |
| | | | US | 2023348294 A1 | 02-11-2023 |
| | | | WO | 2022103105 A1 | 19-05-2022 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240110672
- KR 1020250114149